# EUROPEAN PATENT APPLICATION

(11) **EP 2 182 314 A2**
(43) Date of publication of application: **05.05.2010**
(21) Application number: 09174145.4
(22) Date of filing: 27.10.2009
(51) Int. Cl.: F26B 17/14

(54) **Drying hopper**

(30) Priority: 29.10.2008 JP 2008278905
(71) Applicant: Sysko Corporation, Tokyo 130-0003 (JP)
(72) Inventor: Shimoda, Toshio, deceased (JP); Furukawa, Toshifumi, Tokyo 130-0003 (JP)
(74) Representative: Johnstone, Douglas Ian

(57) **Abstract**

A drying hopper (1) comprises a tube-shaped hopper main body (2) having a material charging port (3) at a top portion thereof and a material discharging port (4) at a bottom portion thereof. A first hopper part (5), a second hopper part (6) and a third hopper part (7) are arranged in this order at intervals from top to bottom within the hopper main body (2), with each being formed substantially in the shape of an inverted cone, and through which dry air is capable of being ventilated, and granular resin materials (P) are capable of being passed. First to third material dispersion elements (8, 9, 10) for dispersing the granular resin materials (P) are each disposed under the material charging port (3), and above the top surface of the respective first to third hopper parts (5, 6, 7). A dry air supply/discharge system (11, 12) forms a dry air ventilation path running from the bottom portion of the hopper main body (2) to above the first material dispersion element (8) through the third hopper part (7), the second hopper part (6), and the first hopper part (5), and leads to the outside of the hopper main body (2).

## Description

The present invention relates to a drying hopper, and particularly relates to a drying hopper which is used for dehumidification drying of resin materials for use with an injection molding machine, or the like.

Conventionally, resin materials for use with an injection molding machine, or the like are dehumidification-dried in a drying hopper before being supplied to a injection molding machine, or the like, for injection molding thereof.

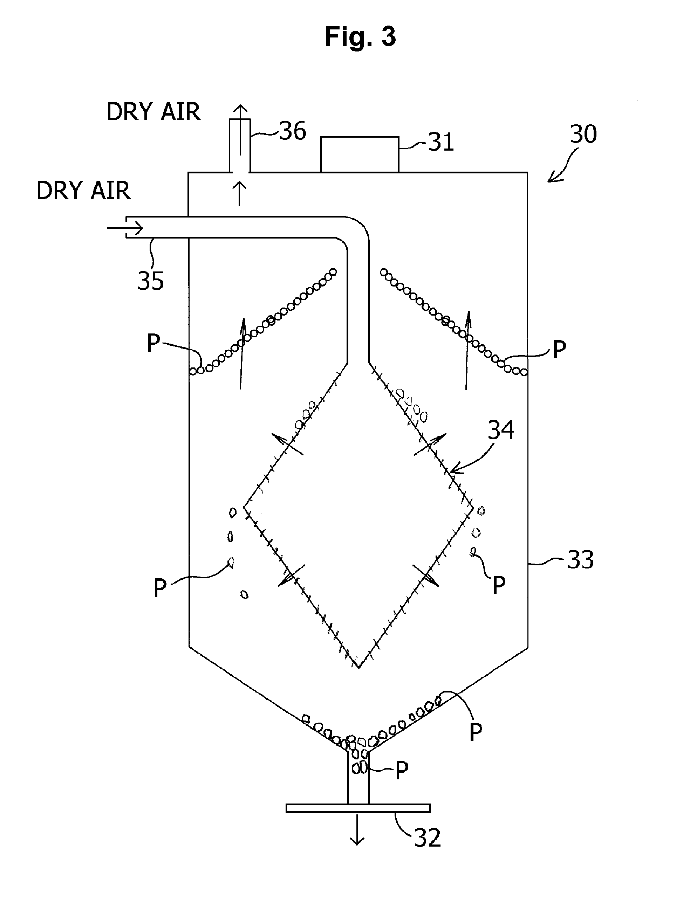

Hereinbelow, the schematic configuration of an example of conventional art pertaining to this type of drying hopper will be explained with reference to an accompanying drawing FIG. 3.

As shown in the same drawing, a drying hopper 30 is comprised of a hopper main body 33 which is tower-shaped (cylindrical or square tube-shaped), having a material charging port 31 at a top portion thereof and a material discharging port 32 at a bottom portion thereof. A material dispersion element 34 is disposed within the hopper main body 33 is provided for dispersing granular resin materials P, such as polycarbonate resin materials, or the like, dropped from the material charging port 31 within the hopper main body 33 to cause them to fall down toward the material discharging port 32. The material dispersion element 34 is formed of a mesh material capable of air ventilation into a pyramid (for example, an octahedron produced by vertically symmetrically jointing two rectangular pyramids to each other). A dry air supply tube 35 ranges from the top portion of the hopper main body 33 to a top portion of the material dispersion element 34 for feeding heated dry air having a low dew-point temperature from a dehumidification drying machine (not shown) into the material dispersion element 34. A dry air returning port 36 is provided at the top portion of the hopper main body 33.

The dry air which has been fed into the material dispersion element 34 is passed through a mesh portion of this material dispersion element 34. The dry air contacts with a number of resin materials P which have been dispersed while being dropped within the hopper main body 33 and the dry air is for absorbing the moisture contained in the resin materials P while being passed through between resin materials P, before being returned from the dry air returning port 36 to a dehumidification drying machine (not shown).

The above-stated conventional drying hopper 30 is configured such that the dry air discharged from the material dispersion element 34 in the hopper main body 33 absorbs the moisture in the resin materials P before being returned from the dry air returning port 36 to the dehumidification drying machine.

However, the period of time during which the dry air is contacted with the resin materials P is so short that the resin materials P cannot be sufficiently dried. Thus there have been problems in that the dry air which has not yet used up its moisture absorption capacity is discharged as it is, and the resin materials P is required to be dried once again. This means that part of the moisture absorption capacity of the dry air is wasted, and the like.

Japanese Patent Laid-Open Publication No. 2001-294294 discloses a drying apparatus having a hopper comprising a right circular cylinder-shaped first cylindrical part in the upper section thereof. A tapered cylindrical part is connected to a bottom part of the first cylindrical part, and is gradually tapered downward. A right circular cylinder-shaped second cylindrical part is connected to a bottom portion of the tapered cylindrical part. A bottom portion of the right cylinder-shaped second cylindrical part has the shape of an inverted cone, and is provided with a hot blast or air supply tube for supplying hot blast or air to the inverted cone-shaped portion. The hopper has a first cold blast or air supply tube and a second blast or air supply tube for supplying cold blast or air to the hopper, and the like.

This drying apparatus though, is of a complicated construction as a whole, requiring, in addition to the hopper itself which has a complicated construction, accessory elements, which include the hot blast supply tube, the first cold blast supply tube, and the second cold blast supply tube.

The problems to be solved by the present invention lie in the fact that no drying hoppers are available which have a simplified construction of the hopper itself, and allows the absorption capacity of the dry air to be effectively utilized for improved drying efficiency with the time for drying the resin materials being shortened.

It is an object of the present invention to realize and provide a drying hopper which solves these problems.

The drying hopper pertaining to the present invention comprises, as a most important feature:
a tube-shaped hopper main body having a material charging port at a top portion thereof and a material discharging port at a bottom portion thereof;
hopper parts arranged in a plurality of stages in this order at intervals from top to bottom within this hopper main body, each being formed substantially in the shape of an inverted cone, and through which dry air is capable of being ventilated, and granular resin materials are capable of being passed;
material dispersion elements arranged in a plurality of stages for dispersing the granular resin materials that are each disposed under the material charging port, and above the top surface of the respective hopper parts arranged in a plurality of stages; and
a dry air supply/discharge system which forms a dry air ventilation path running from the bottom portion of the hopper main body to above the material dispersion element at the uppermost stage through the hopper parts arranged in a plurality of stages and leading to the outside of the hopper main body,
the counter-flow contact over a plurality of stages of a number of granular resin materials dispersed and dropped in the hopper main body with the dry air causing the moisture contained in the granular resin materials to be absorbed and removed by the dry air before the number of granular resin materials are discharged from the material discharging port.

By having a counter-flow contact over a plurality of stages of a number of granular resin materials with dry air being within the hopper main body for a long period of time as compared to that attainable under the conventional art allows the moisture contained in the number of granular resin materials to be effectively absorbed by the dry air such that the number of granular resin materials are thoroughly dried before being discharged to the outside of the drying hopper to be fed to an injection molding machine, or the like, for being injection molded. Thus, simplification of the configuration has been realized, and a high-performance drying hopper which, when comprehensively viewed, contributes to shortening the drying time can be realized and provided.

The drying hopper of the present invention has achieved the above-stated purpose.

The drying hopper may have a first hopper part, a second hopper part and a third hopper part which are arranged in this order at intervals from top to bottom within this hopper main body, and first to third material dispersion elements for dispersing the granular resin materials that are each disposed under the material charging port, and above the top surface of the respective first to third hopper parts. The dry air supply/discharge system may form a dry air ventilation path running from the bottom portion of the hopper main body to above the first material dispersion element at the uppermost stage through the third hopper part, the second hopper part, and the first hopper part, and leading to the outside of the hopper main body, the counter-flow contact over three stages of a number of granular resin materials dispersed and dropped over three stages in the hopper main body.

On the basis of a simple configuration in which, within the hopper main body, inverted cone-shaped hopper parts are arranged in three stages, and cone-shaped material dispersion elements are arranged in three stages, a drying hopper, which offers the same advantages as those of the drying hopper pertaining to the invention as described above, can be realized and provided.

The drying hopper may include an air flow meter for measuring the air flow rate for the dry air supplied to the hopper main body and a dew-point hygrometer for measuring the dew-point temperature of the same. The drying hopper may include a control unit which, when the flow rate for the dry air and/or the dew-point temperature of the same are/is not suitable, drives an alarming device for giving an alarm,

By having the air flow rate for the dry air and the dew-point temperature of the same monitored by the air flow meter and the dew-point hygrometer, respectively, when the measurement is not suitable, the alarming device gives an alarm. Thus a drying hopper which can realize the proper quality control of the resin materials to be fed to an injection molding machine, or the like can be realized and provided.

Hereinbelow, a drying hopper pertaining to an embodiment of the present invention will be explained in detail with reference to the accompanying drawings, wherein:
FIG. 1 is a schematic configuration drawing of a drying hopper of an embodiment pertaining to the present invention;
FIG. 2 is a schematic block diagram of a control system for the drying hopper of the embodiment pertaining to the present invention; and
FIG. 3 is a schematic configuration drawing of a conventional drying hopper.

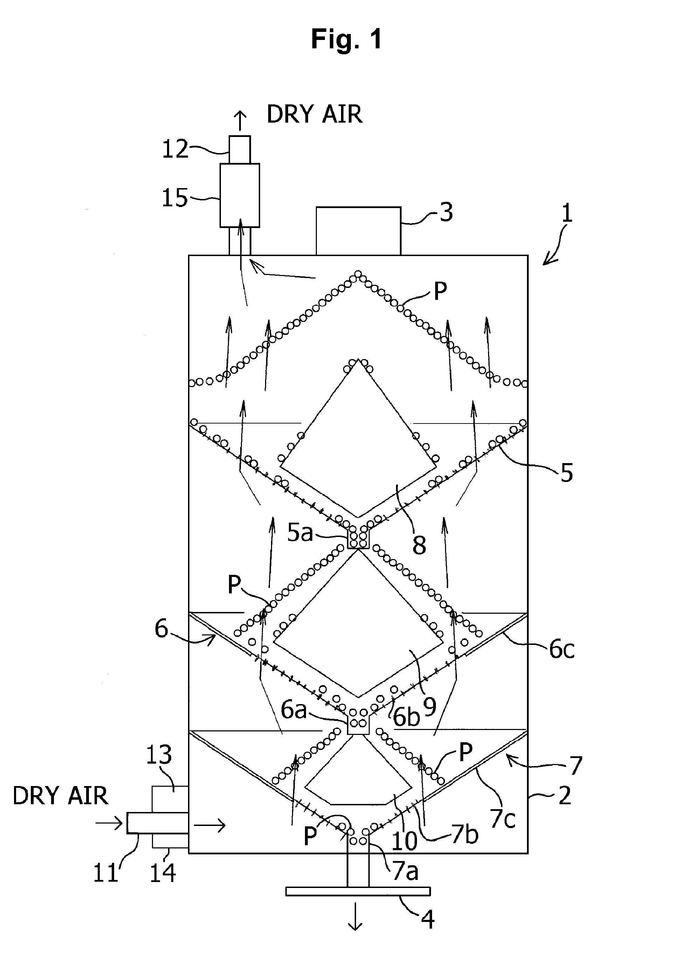

As shown in FIG. 1, a drying hopper 1 pertaining to the present embodiment is comprised of a tower-shaped (for example, cylindrical) hopper main body 2 having a material charging port 3 at a top portion thereof and a material discharging port 4 at a bottom portion thereof. A first hopper part 5, a second hopper part 6, and a third hopper part 7 are arranged in this order at intervals from top to bottom within this hopper main body 2, each being formed substantially in the shape of an inverted cone.

The first hopper part 5 is formed, as a whole, of a mesh material through which air can be ventilated, and in the central area of a bottom portion of the first hopper part 5, a cylindrical flow pass tube part 5a is provided through which granular resin materials P of, for example, polycarbonate resin, or the like are passed.

The second hopper part 6 is formed substantially in the shape of an inverted cone. An inverted cone-shaped inner cone part 6b formed of a mesh material through which air can be ventilated is connected to an outer edge part 6c formed of a sheet material outside of the inner cone part 6b. In the central area of a bottom portion of the second hopper part 6, a cylindrical flow pass tube part 6a is provided through which resin materials P are passed.

The third hopper part 7 is formed substantially in the shape of an inverted cone. An inverted cone-shaped inner cone part 7b formed of a mesh material through which air can be ventilated is connected to an outer edge part 7c formed of a sheet material outside of the inner cone part 7b. In the bottom part of the inverted cone-shaped inner cone part 7b, an opening part 7a is provided, and is opposite the material discharging port 4.

And, these members are dimensioned such that the air ventilation area is increased in the order of the mesh regions for the inner cone part 7b, inner cone part 6b, and first hopper part 5.

Within the hopper main body 2 in the drying hopper 1 pertaining to the present embodiment, there is disposed above the flow pass tube part 5a of the first hopper part 5 and under the material charging port 3 a first material dispersion element 8 contoured in the shape of a circular cone or a pyramid (for example, an octahedron produced by jointing quadrangular pyramids vertically symmetrically). The first material dispersion element 8 is for dispersing the granular resin materials P dropped from the material charging port 3 before they are dropped into the flow pass tube part 5a.

In addition, within the hopper main body 2, there is disposed between the first hopper part 5 and the second hopper part 6 a second material dispersion element 9 contoured in the shape of a circular cone or a pyramid (for example, an octahedron produced by jointing quadrangular pyramids vertically symmetrically) for dispersing the granular resin materials P dropped before they are dropped into the flow pass tube part 6a.

Further, within the hopper main body 2, there is disposed between the second hopper part 6 and the third hopper part 7 a third material dispersion element 10 contoured in the shape of a circular cone or a pyramid (for example, substantially a hexahedron) for dispersing the granular resin materials P dropped before they are dropped into the material discharging port 4 through the opening part 7a.

Further, in the drying hopper 1 pertaining to the present embodiment, a dry air supply tube 11 is provided in the bottom portion of the hopper main body 2, and a dry air returning port 12 is provided at the upper end of the hopper main body 2.

To the dry air supply tube 11 are connected an air flow meter 13 for measuring the air flow rate for the dry air, and a dew-point hygrometer 14 for measuring the dew-point temperature (the temperature at which the water vapor contained in the air is started to be changed into water drops).

In the area of the dry air returning port 12, a filter 15 is disposed for catching the powdered matters, and the like, in the dry air.

The discharge side of a dehumidification drying machine (not shown) for generating dry air (dehumidification air) at a temperature of -30 ° C to -45 ° C is connected to the dry air supply tube 11, while the suction side of the dehumidification drying machine is connected to the dry air returning port 12, so that the dry air is circulated.

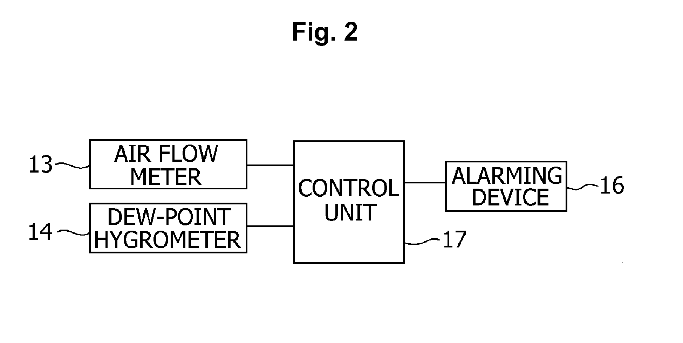

FIG. 2 is a diagram illustrating a control system for the drying hopper 1 pertaining to the present embodiment. This control system has a control unit 17 which takes in data of the air flow rate for the dry air that is measured by the air flow meter 13, and that of the dew-point temperature measured by the dew-point hygrometer 14, and an alarming device 16 which is connected to this control unit 17 for issuing a buzzer sound, or the like. The control unit 17 compares the data of the air flow rate and that of dew-point temperature with the predetermined proper value of air flow rate, and the predetermined proper value of dew-point temperature, respectively, and when the result of the comparison is not suitable, drives the alarming device 16 to give an alarm.

Next, the function and advantages of the drying hopper 1 pertaining to the present embodiment will be described.

In the drying hopper 1 pertaining to the present embodiment, a number of granular resin materials P charged from the material charging port 3 into the hopper main body 2 are dispersed by the first material dispersion element 8 along the tapered surface or in all the four directions to be led to the first hopper part 5, and are dropped along the slope thereof. They are further passed through the flow pass tube part 5a to be dropped onto the second material dispersion element 9.

Next, the granular resin materials P are dispersed by the second material dispersion element 9 along the tapered surface or in all the four directions to be led to the second hopper part 6, and are dropped along the slope thereof. They are further passed through the flow pass tube part 6a to be dropped onto the third material dispersion element 10.

Further, the granular resin materials P are dispersed by the third material dispersion element 10 along the tapered surface or in all the four directions to be led to the third hopper part 7, and are dropped along the slope thereof. They are passed through the opening part 7a and led to the material discharging port 4 before being discharged outside of the drying hopper 1.

On the other hand, the dry air from the dehumidification drying machine flows in from the dry air supply tube 11 into the hopper main body 2. The dry air is passed through the inner cone part 7b of the third hopper part 7 that is formed of a mesh material, before being raised. Next, the dry air is passed through the inner cone part 6b of the second hopper part 6 that is formed of a mesh material, before being raised. The dry air is further passed through a mesh portion of the first hopper part 5 before being raised, and is passed through the filter 15 to be led to the dry air returning port 12 before being returned to the dehumidification drying machine.

In the drying hopper 1 pertaining to the present embodiment, such a counter-flow contact over three stages in total of a number of granular resin materials P involves the dry air being within the hopper main body 2 for a long period of time as compared to that attainable under the conventional art. This allows the moisture contained in the number of granular resin materials P to be effectively absorbed by the dry air such that the number of granular resin materials P are thoroughly dried before being discharged to the outside of the drying hopper 1 to be fed to an injection molding machine, or the like, for being injection molded.

In other words, the drying hopper 1 pertaining to the present embodiment allows the moisture absorption capacity of the dry air to be sufficiently utilized as compared to the conventional drying hopper, and when comprehensively viewed, the resin materials P can be sufficiently dried in a short period of time.

In addition, according to the drying hopper 1 pertaining to the present embodiment, the air flow rate for the dry air and the dew-point temperature of the same are monitored by the air flow meter 13 and the dew-point hygrometer 14, respectively, and when the measurement is not suitable, the alarming device 16 gives an alarm. Thus the proper quality control of the resin materials P to be fed to an injection molding machine, or the like can be realized.

Furthermore, according to the drying hopper 1 pertaining to the present embodiment, minute dust particles produced by the counter-flow contact of the resin materials P with the dry air being sucked, are removed by the filter 15 so that the quality of the resin materials P can be improved.

With the drying hopper 1 pertaining to the present embodiment, resin materials P were subjected to drying treatment, using dry air having a temperature of 120° C and a dew-point temperature of -40° C, and the moisture measurement of the resin materials P was carried out by means of a Karl Fischer moisture meter, which gave a result of 1835 ppm before drying and 294 ppm after drying for 1 hr.

The drying hopper 1 pertaining to the present embodiment may be realized, being provided with a two-stage configuration, a four-stage one, or the like, of hopper parts and material dispersion elements as well as the three-stage configuration as described above.

The present invention is widely applicable to treatment by drying of a variety of granular resin materials besides polycarbonate resin materials.

### Description of Symbols

1: Drying hopper
2: Hopper main body
3: Material charging port
4: Material discharging port
5: First hopper part
5a: Flow pass tube part
6: Second hopper part
6a: Flow pass tube part
6b: Inner cone part
6c: Outer edge part
7: Third hopper part
7a: Opening part
7b: Inner cone part
7c: Outer edge part
8: First material dispersion element
9: Second material dispersion element
10: Third material dispersion element
11: Dry air supply tube
12: Dry air returning port
13: Air flow meter
14: Dew-point hygrometer
15: Filter
16: Alarming device
17: Control unit
P: Resin materials

## Claims

1. A drying hopper (1) comprising:
a tube-shaped hopper main body (2) having a material charging port (3) at a top portion thereof and a material discharging port (4) at a bottom portion thereof;
hopper parts (5, 6, 7) which are arranged in a plurality of stages in this order at intervals from top to bottom within said hopper main body (2), each being formed substantially in the shape of an inverted cone, and through which dry air is capable of being ventilated, and granular resin materials (P) are capable of being passed;
material dispersion elements (8, 9, 10) for dispersing the granular resin materials that are arranged in the plurality of stages, each being disposed under said material charging port, and above a top surface of the respective hopper parts (5, 6, 7) which are arranged in the plurality of stages; and
a dry air supply/discharge system (11, 12) which is arranged to form a dry air ventilation path running from the bottom portion of said hopper main body (2) to above the material dispersion element (8) at the uppermost stage through the hopper parts (7, 6, 5) arranged in the plurality of stages and leading to the outside of the hopper main body (2),
whereby a counter-flow contact over the plurality of stages of a number of granular resin materials (P) dispersed and dropped in said hopper main body (2) with the dry air causes moisture contained in the granular resin materials (P) to be absorbed and removed by the dry air before said number of granular resin materials (P) are discharged from the material discharging port (4).

2. The drying hopper as claimed in claim 1, wherein the hopper parts comprise a first hopper part (5), a second hopper part (6) and a third hopper part (7) which are arranged in this order at intervals from top to bottom within said hopper main body (2).

3. The drying hopper as claimed in claim 2, wherein the material dispersion elements comprises first to third material dispersion elements (8, 9, 10) for dispersing the granular resin materials (P) that are each disposed under said material charging port (3), and above the top surface of the respective first to third hopper parts (5, 6, 7).

4. The drying hopper as claimed in claim 3, wherein the dry air supply/discharge system (11, 12) is arranged to form a dry air ventilation path running from the bottom portion of said hopper main body (2) to above the first material dispersion element (8) at the uppermost stage through the third hopper part (7), the second hopper part (6), and the first hopper part (5), and leading to the outside of the hopper main body (2).

5. The drying hopper as claimed in claim 2, 3 or 4, wherein the counter-flow contact is over three stages of a number of granular resin materials dispersed and dropped over the three stages in said hopper main body (2).

6. The drying hopper as claimed in any preceding claim, including an air flow meter (13) for measuring the air flow rate for the dry air supplied to said hopper main body (2)

7. The drying hopper as claimed in any preceding claim, including a dew-point hygrometer (14) for measuring the dew-point temperature of the dry air.

8. The drying hopper as claimed in claims 6 and 7, including a control unit (17) which, when the flow rate for the dry air and/or the dew-point temperature of the dry air are/is not suitable, is arranged to cause an alarming device (16) to give an alarm.

9. A process of operating the drying hopper as claimed in any preceding claim, comprising the steps of:
forming a dry air ventilation path running from the bottom portion of said hopper main body (2) to above the material dispersion element (8) at the uppermost stage through the hopper parts (7, 6, 5) arranged in the plurality of stages and leading to the outside of the hopper main body (2);
dispersing and dropping a number of granular resin materials (P) over the plurality of stages in said hopper main body (2) so that a counter-flow contact with the dry air causes moisture contained in the granular resin materials (P) to be absorbed and removed by the dry air; and
discharging said number of granular resin materials (P) from the material discharging port (4).
